# EUROPÄISCHE PATENTSCHRIFT

(11) **EP 1 205 019 B1**
(45) Veröffentlichungstag und Bekanntmachung des Hinweises auf die Patenterteilung: **28.05.2003**
(21) Anmeldenummer: 00956449.3
(22) Anmeldetag: 14.08.2000
(51) Int. Cl.: H02K 9/10, H02K 1/20

(54) **RELUKTANZ-ELEKTROMASCHINE**
INDUCTION-TYPE ELECTRIC MACHINE
MACHINE ELECTRIQUE A RELUCTANCE

(30) Priorität: 20.08.1999 DE 19939598
(43) Veröffentlichungstag der Anmeldung: 15.05.2002
(73) Patentinhaber: Magnet-Motor Gesellschaft für magnetmotorische Technik mbH, D-82319 Starnberg (DE)
(72) Erfinder: EHRHART, Peter, D-81375 München (DE); HEIDELBERG, Götz, D-82319 Starnberg-Percha (DE)
(74) Vertreter: Klunker . Schmitt-Nilson . Hirsch
(86) Internationale Anmeldenummer: EP0007929
(87) Internationale Veröffentlichungsnummer: WO01015304

(56) Entgegenhaltungen:
- WO-A-00/01053
- DE-A- 3 905 997
- US-A- 4 513 218
- US-A- 5 578 879
- US-A- 5 703 421
- PATENT ABSTRACTS OF JAPAN vol. 018, no. 667 (E-1645), 15. Dezember 1994 (1994-12-15) -& JP 06 261510 A (NISSAN MOTOR CO LTD), 16. September 1994 (1994-09-16)
- PATENT ABSTRACTS OF JAPAN vol. 1998, no. 12, 31. Oktober 1998 (1998-10-31) & JP 10 201196 A (NIPPON ELECTRIC IND CO LTD), 31. Juli 1998 (1998-07-31)

## Beschreibung

Die Erfindung bezieht sich auf eine Reluktanz-Elektromaschine entsprechend dem Oberbegriff des Anspruchs 1.

Eine derartige Reluktanz-Elektromaschine ist aus der DE-A-3 905 997 bekannt.

Reluktanz-Elektromaschinen unterscheiden sich von anderen Elektromaschinen dadurch, daß sie keinen elektromagnetischen oder dauermagnetischen Erregerteil besitzen. Reluktanz-Elektromaschinen funktionieren durch Nutzung des Effekts der magnetischen Anziehung von magnetisch leitenden Teilen unter dem Einfluß eines sie durchsetzenden magnetischen Flusses. Sowohl der Stator als auch der Rotor weisen ausgeprägte, magnetisch leitfähige Pole auf. Die Spulenwicklungen werden so von Strom durchflossen, daß sie jeweils einen benachbart stehenden Rotorpol anziehen. Der Strom im Statorpol muß zum richtigen Zeitpunkt nach der Anziehung des betreffenden Rotorpols wieder ausgeschaltet werden, um den Rotorpol in der Laufrichtung wieder freizugeben. Würde nämlich der Spulenstrom weiterhin fließen (unabhängig davon, in welcher Richtung), würde sich eine fortgesetzte Anziehung durch den Statorpol, d.h. eine rücktreibende Kraft, ergeben, die eine weitere Drehung des Rotors verhindern würde.

Es liegt daher in der Natur der Reluktanz-Elektromaschinen, daß sie im Grunde nur zur Hälfte der Zeit ausgenutzt sind. Deshalb erreichen Reluktanz-Elektromotoren -ansonsten ungeänderte Auslegungsparameter zugrundegelegt - normalerweise nur in etwa halbe Drehmomentwerte bzw. Leistungswerte im Vergleich zu anderen Elektromotoren.

Der Erfindung liegt die Aufgabe zugrunde, eine Reluktanz-Elektromaschine der eingangs abgehandelten Art in Richtung höherer Werte für Dauer-Drehmoment bzw. Dauer-Leistung zu verbessern.

Die gestellte Aufgabe ist durch the Reluktanz-Elektromaschine mit den Merkmalen des Anspruchs 1 gelöst.

Vorzugsweise sind die Spulenwicklungen jeweils mit einer Umschließung versehen. Alternativ vorzugsweise sind jeweils mehrere Spulenwicklungen gemeinsam mit einer Umschließung versehen. Nach einer besonders bevorzugten Ausführungsform ist der Statorteil insgesamt mit einer Umschließung versehen. In allen genannten Fällen können pro durch die Umschließung umschlossenem Raum eine oder mehrere Kühlmittelzuführungen und eine oder mehrere Kühlmittelabführung vorgesehen sein.

Zu dem Begriff "vorspringende, diskrete Pole" in Merkmal (c) des Anspruchs 1 wird noch angemerkt, daß man die Bereiche zwischen den diskreten Polen auch mit einem nichtmagnetischen Material auffüllen kann, so daß der Rotorteil luftspaltseitig praktisch glatt ist.

Durch die Erfindung wird gelehrt, die Kühlung des Statorteils wesentlich effizienter als bei bisherigen Reluktanz-Elektromaschinen zu gestalten. Dadurch kann die Elektromaschine - nicht nur mehr kurzzeitig, sondern auf Dauer - wesentlich höher belastet werden.

Die weiter unten folgenden Ausführungen werden deutlich machen, daß die erfindungsgemäße Kanalisierung der Kühlmittelströmung in der Praxis meist dazu führt, daß der Statorteil der Reluktanz-Elektromaschine auf der dem Luftspalt zugewandten Seite mit einer Abdichtungslage versehen ist. Die Abdichtungslage führt dazu, daß der Abstand zwischen den Statorpolen und den Rotorpolen über den Luftspalt hinweg größer ist als ohne das Vorhandensein einer Abdichtungslage. Dies bedeutet - bei ansonsten ungeänderten Auslegungsparametern - eine Verkleinerung des magnetischen Flusses zwischen dem jeweils betrachteten Paar von Statorpol und Rotorpol und damit eine Verschlechterung der magnetischen Verhältnisse der Elektromaschine. Bei den entsprechenden, eine Abdichtungslage aufweisenden Ausführungen der erfindungsgemäßen Reluktanz-Elektromaschine wird dieser Nachteil bewußt in Kauf genommen; erfindungsgemäß erbringt die wesentlich effizientere Kühlung einen größeren Vorteil als die Verschlechterung der magnetischen Verhältnisse durch zusätzliches Material im Luftspalt.

Diese Einschränkungen gelten nicht, wenn die Statorpole durch geeignete Umschließungen einzeln zugeordnete Kühlräume oder nur die stirnseitigen Bereiche erfassende Kühlkanäle, die nicht in den Luftspalt hineinragen, aufweisen.

Auch bei bisherigen Reluktanz-Elektromaschinen hat man schon mit Kühlung gearbeitet. Konkret kennt man das unspezifische Hindurchblasen von Luft durch die gesamte Elektromaschine (Statorteil, Luftspalt, Rotorteil) oder eine Kühlung an der dem Luftspalt abgewandten Seite des Statorteils. Im Gegensatz hierzu werden bei der erfindungsgemäßen Reluktanz-Elektromaschine diejenigen Bereiche direkt oder quasi-direkt gekühlt, in denen die Verlustwärme hauptsächlich entsteht. Ein erster Hauptentstehungsbereich von Verlustwärme sind die Spulenwicklungen (häufig "Kupferverluste" genannt; sie entstehen hauptsächlich durch den Stromdurchgang). Erfindungsgemäß werden die Spulenwicklungen direkt durch entlangströmendes Kühlmedium gekühlt. Selbst wenn man die Spulenwicklungen nur in den Räumen zwischen den Statorzähnen oder nur in den Räumen stirnseitig von den Statorzähnen (und nicht in beiden Räumen) kühlt, erreicht man eine sehr effiziente Kühlung, weil das gut stromleitende Material der Spulenwicklungen auch die Verlustwärme gut zu den konkret gekühlten Bereichen fortleitet. Ein weiterer, hauptsächlicher Entstehungsort von Verlustwärme sind die Statorzähne (häufig vereinfachend "Eisenverluste" genannt; diese Verluste entstehen hauptsächlich durch den dauernden Wechsel zwischen Magnetisieren und Entmagnetisieren bzw. Ummagnetisieren der Statorzähne). Das beschriebene Kühlen durch die Strömung von Kühlmedium durch Räume, in denen Spulenwicklungen des Statorteils untergebracht sind, stellt zugleich ein Kühlen der Statorzähne dar, da - zumindest bei vielen Ausführungsarten der Spulenwicklungen - das Kühlmedium in den genannten Räumen bis zu den Statorzähnen vordringt und da die in körperlichem Kontakt mit den Statorzähnen befindlichen Spulenwicklungen durch Wärmeleitung Wärme von den Statorzähnen abführen. Außerdem strömt das Kühlmedium normalerweise am Statorrücken zwischen den Statorzähnen entlang; der Statorrücken erhält durch Wärmeleitung Wärme von den Statorzähnen.

In bevorzugter Weiterbildung der Erfindung ist vorgesehen, daß die Statorzähne innere Strömungspassagen für Kühlmedium aufweisen. Dies führt zu einer direkten, ganz besonders effizienten Innenkühlung der Statorzähne. Ferner wird als erfindungsgemäß bevorzugte Möglichkeit genannt, zusätzlich oder statt der beschriebenen Innenkühlung der Statorzähne innere Strömungspassagen für Kühlmedium im Bereich des Statorteils zurückgesetzt von den Statorzähnen vorzusehen.

Es wird ausdrücklich darauf hingewiesen, daß der in der vorliegenden Anmeldung verwendete Begriff "Reluktanz-Elektromaschine" sowohl Elektromotoren (Umwandlung elektrischer Energie in mechanische Energie) als auch Stromgeneratoren (Umwandlung mechanischer Energie in elektrische Energie) umfaßt. Außerdem wird ausdrücklich darauf hingewiesen, daß der Begriff "Statorteil" nicht bedeuten soll, daß der Statorteil zwangsläufig unbewegt sein soll, und daß der Begriff "Rotorteil" nicht bedeuten soll, daß der Rotorteil zwangsläufig ein rotierbarer Bestandteil der Elektromaschine sein soll. Man kann vielmehr ohne weiteres den Statorteil (also den mit Spulenwicklungen ausgestatteten Bestandteil der Elektromaschine) als rotierenden Maschinenteil vorsehen und den Rotorteil als stationären, unbewegten Maschinenteil vorsehen. Die umgekehrte Auslegung ist allerdings normalerweise günstiger, weil sich die Spulenwicklungen, denen Strom zugeführt wird bzw. von denen im Fall des Generators Strom entnommen wird, an einem stationären Maschinenteil befinden, was Schleifkontakte vermeidet. Außerdem sei der mögliche Ausführungsfall erwähnt, daß sowohl der Statorteil als auch der Rotorteil sich mit unterschiedlicher Drehzahl und/oder unterschiedlicher Drehrichtung drehen, insbesondere wenn sie über ein Getriebe miteinander verbunden sind oder Bestandteile eines Getriebes, z. B. eines Planetengetriebes, sind.

Die erfindungsgemäße Elektromaschine ist vorzugsweise mit elektronischer Ein- und Ausschaltung der Spulenwicklungsströme ausgebildet. Mittels eines geeigneten Sensors oder aufgrund von elektrischen Informationen aus der Speisung des Elektromotors wird die Rotations-Relativstellung zwischen dem Statorteil und dem Rotorteil ermittelt; der Strom durch die Spulenwicklungen wird jeweils zur richtigen Zeit eingeschaltet und wieder ausgeschaltet. Geeignete elektrische Schaltungen und geeignete elektronische Bauelemente zur Verwirklichung der beschriebenen Stromsteuerung bei Elektromotoren bzw. Stromentnahme bei Generatoren sind bekannt und müssen hier nicht näher beschrieben werden.

Die erfindungsgemäße Reluktanz-Elektromaschine kann entweder mit - grob gesprochen - zylindrischem Luftspalt (so daß sich zusammenwirkende Paare von Statorpol und Rotorpol gleichsam in Radialrichtung "ansehen") oder mit - grob gesprochen - in einer Ebene rechtwinklig zur Rotationsachse des Rotorteils befindlichem Luftspalt (so daß sich zusammenwirkende Paare von Statorpol und Rotorpol gleichsam in Axialrichtung "ansehen") ausgeführt sein. In beiden Fällen ist es möglich, mit mehreren Luftspalt-Bereichen zu arbeiten, also z.B. mehreren zylindrischen Luftspalt-Bereichen auf unterschiedlichen Durchmessern der Elektromaschine oder mehreren "ebenen" Luftspalt-Bereichen axial nebeneinander, wobei sich in beiden Fällen eine Abfolge Statorteil-Rotorteil-Statorteil-Rotorteil-Statorteil usw. ergibt.

In bevorzugter Ausgestaltung der Erfindung ist der Statorteil auf der dem Luftspalt zugewandten Seite mit einer Abdichtungslage versehen. Mittels der Abdichtungslage lassen sich die Räume, in denen die Spulenwicklungen untergebracht sind, konstruktiv besonders einfach in Richtung zum Luftspalt hin kühlmediumdicht abschließen. Um die Räume stirnseitig von den Statorzähnen in den anderen Richtungen kühlmediumdicht abzuschließen, kann man insbesondere ein im Querschnitt U-förmiges Bauteil pro Statorzahn vorsehen. Diese Verhältnisse werden anschaulicher bei der weiter unten folgenden Beschreibung eines konkreten Ausführungsbeispiels beschrieben.

Im Fall des - grob gesprochen - zylindrischen Luftspalts ist die Abdichtungslage normalerweise zylindrisch oder im wesentlichen zylindrisch. Im Fall des "ebenen", rechtwinklig zur Rotationsachse stehenden Luftspalts ist die Abdichtungslage normalerweise eben oder im wesentlichen eben und in Frontansicht im wesentlichen kreisringförmig.

Vorzugsweise weist die Abdichtungslage eine erste Schicht zur Erfüllung der Abdichtungsfunktion und eine zweite Schicht zur Aufnahme der auf die Abdichtungslage wirkenden Kräfte auf. Die erste Schicht kann vorzugsweise eine Kunststoffolie sein. Die zweite Schicht kann man vorzugsweise aus Kunststoff, insbesondere faserverstärktem Kunststoff (z. B. kohlefaserverstärkt), ausbilden. An auf die Abdichtungslage wirkenden Kräften seien ganz besonders Kräfte aufgrund von Überdruck des Kühlmediums und Fliehkräfte aufgrund der Rotation des Statorteils (bei Maschinenausführung mit rotierendem Statorteil) genannt. Die Dicke der Abdichtungslage beträgt vorzugsweise 0,3 bis 1,5 mm.

Bei der erfindungsgemäßen Reluktanz-Elektromaschine kann entweder flüssiges Kühlmedium oder gasförmiges Kühlmedium vorgesehen sein. Flüssiges Kühlmedium führt in der Regel zu höherer Kühlungseffizienz.

Im Fall der Ausführung mit - grob gesprochen - zylindrischem Luftspalt kann man entweder eine Ausführung mit Außenrotor (der Rotorteil liegt mit seinen Rotorpolen radial weiter außen als der Luftspalt) oder eine Ausführungsform mit Innenrotor (der Statorteil liegt mit seinen Statorzähnen radial weiter außen als der Luftspalt) wählen. Im erstgenannten Fall bildet man den Rotorteil häufig insgesamt topfförmig aus. Das gleiche gilt bei Rotoren mit dem weiter vorn angesprochenen Mehrfach-Luftspalt in zylindrischer Konfiguration.

Vorzugsweise ist der Statorteil auf der dem Rotorteil abgewandten Seite so gestaltet, daß der Wärmeübergang vergrößert wird. Dies kann durch Vergrößerung der Oberfläche bewerkstelligt werden oder auch und zusätzlich durch die Erzeugung von turbulenter Strömung. Als konkretes Beispiel seien Wärmeabfuhrrippen genannt. An dieser "Rückseite" des Statorteils kann man entweder mit dem gleichen Kühlmedium kühlen, wie es auch durch die den Spulenwicklungen zugeordneten Strömungspassagen strömt. Alternativ kann man an dieser "Rückseite" auch mit einem anderen Kühlmedium arbeiten, z.B. mittels eines Gebläses gelieferte Kühlluft oder Luft ohne Zwangsbewegung.

Vorzugsweise sind die Spulenwicklungen in den stirnseitig von den Statorzähnen befindlichen Wickelkopfbereichen mit zwischen Spulenwicklungsleitern freigelassenen Strömungspassagen für das Kühlmedium ausgeführt. Während die Spulenwicklungen in den Nuten zwischen den Statorzähnen aus elektrischen und magnetischen Gründen, insbesondere zur Verlustsenkung, normalerweise möglichst dicht gepackt gewickelt sein sollen, ist es in den stirnseitig von den Statorzähnen befindlichen Wickelkopfbereichen eher tolerabel, entweder einzelne Spulenwicklungsleiter mit Abstand voneinander anzuordnen, oder, als weiteres Beispiel, zwischen Wicklungslagen, z.B. in Axialrichtung, kleine Abstände zu lassen. Die geschilderten Maßnahmen dienen der Intensivierung des Wärmeübergangs in den genannten Wickelkopfbereichen.

In bevorzugter Weiterbildung der Erfindung sind die Spulenwicklungen des Statorteils als Einzelspulen ausgebildet, die hinsichtlich des magnetischen Flusses nicht miteinander verkettet sind. Dies kann man sich beispielsweise so vorstellen, daß auf jeden einzelnen Statorzahn eine vorgefertigte Einzelspule aufgeschoben wird. Die Einzelspulen sind dann entweder direkt elektrisch miteinander verbunden (z.B. in Reihe oder parallel) oder sind einzeln oder gruppenweise an die elektronische Stromsteuerung angeschlossen.

Vorzugsweise sind ein erster, innerer Kühlkreislauf zum Zirkulieren des Kühlmediums durch die beschriebenen Strömungspassagen und ein zweiter, äußerer Kühlkreislauf zum Zirkulieren eines weiteren Kühlmediums vorgesehen, wobei der äußere Kühlkreislauf über einen Wärmetauscher an den inneren Kühlkreislauf angeschlossen ist. Das Kühlmedium im inneren Kühlkreislauf und das weitere Kühlmedium im äußeren Kühlkreislauf können gleiche Kühlmedien sein. Ganz besonders bevorzugt ist jedoch eine Ausführung, bei denen das Kühlmedium im inneren Kühlkreislauf elektrisch nicht leitfähiges Öl ist und das weitere Kühlmedium im äußeren Kühlkreislauf eine andere Kühlflüssigkeit, insbesondere Wasser, ist. In der Regel sieht man einen weiteren Wärmetauscher vor, über den der äußere Kühlkreislauf seine Wärme an die Umgebung abgibt.

Vorzugsweise weist der innere Kühlkreislauf eine eigene Umwälzpumpe auf. Vorzugsweise sind der innere Kühlkreislauf und der Wärmetauscher räumlich an der Reluktanz-Elektromaschine integriert. Der äußere Kühlkreislauf kann, muß aber. nicht, ein Stück von der Reluktanz-Elektromaschine wegführen.

Die beschriebene Ausführung mit zwei gekoppelten Kühlkreisläufen erlaubt es, das erforderliche Volumen an Kühlmedium im inneren Kühlkreislauf gering zu halten. Dies ist günstig, weil man hier in aller Regel mit speziellem Kühlmittel, welches mit den von Kühlmittel bespülten Bereichen in der Elektromaschine störungsfrei in Berührung kommen kann, arbeiten muß. Diese speziellen Kühlmedien, z.B. elektrisch nicht leitfähiges Kühlungsöl, sind vergleichsweise teuer.

Ein konkretes Ausführungsbeispiel für eine Elektromotorkühlung mit einem inneren und einem äußeren Kühlkreislauf ist in der deutschen Patentanmeldung 196 51 119.4 beschrieben.

Die Erfindung und Ausgestaltungen der Erfindung werden nachfolgend anhand eines schematisiert zeichnerisch dargestellten Ausführungsbeispiels noch näher erläutert. Es zeigt:
- Fig. 1: eine Reluktanz-Elektromaschine im Querschnitt (der rechtwinklig zur Rotationsachse der Maschine geführt ist);
- Fig. 2: einen Teil der Reluktanz-Elektromaschine von Fig. 1 im Schnitt gemäß II-II in Fig. 1 (der in Umfangsrichtung geführt und dann in die Zeichnungsebene abgewickelt ist);
- Fig. 3: einen Teil der Reluktanz-Elektromaschine von Fig. 1 im Schnitt gemäß III-III in Fig. 2 (der als die Rotationsachse enthaltender, ebener Schnitt geführt ist).

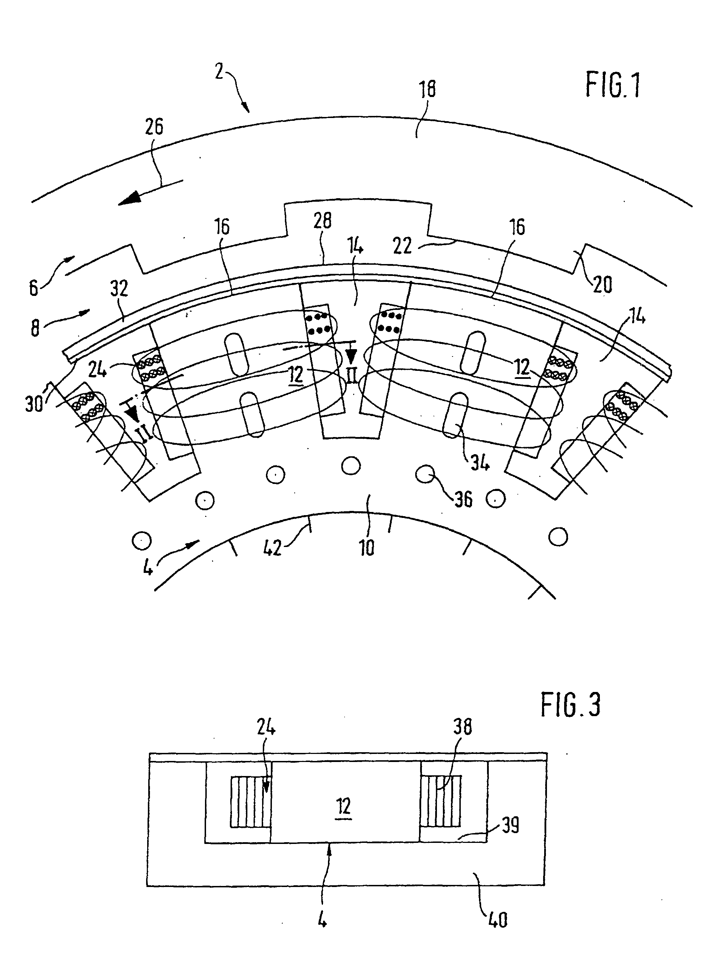

Am anschaulichsten in Fig. 1 erkennt man einen radial weiter innen befindlichen Statorteil 4, einen radial weiter außen befindlichen Rotorteil 6 und dazwischen einen - grob gesprochen - zylindrischen Luftspalt einer Reluktanz-Elektromaschine 2, im folgenden kurz nur "Elektromaschine 2" genannt.

Der Statorteil 4 der Elektromaschine 2 weist einen radial weiter innen befindlichen Basisbereich 10 auf, von dem Statorzähne 12 radial nach außen wegragen. Wenn man in Umfangsrichtung fortschreitet, ist eine Reihe der Statorzähne 12 vorhanden. Jeweils zwischen zwei benachbarten Statorzähnen 12 befindet sich eine Nut 14. Die Statorzähne 12 sind oben kreislinienförmig leicht abgerundet. Die radial äußeren Enden der Statorzähne 12 bilden Statorpole 16, die alle auf einer gemeinsamen Zylinderfläche liegen.

Der Statorteil 4, wie er bisher beschrieben wurde, besteht mit seinem Basisbereich 10 und seinen Statorzähnen 12 aus Statorblechen, die in Richtung senkrecht zur Zeichnungsebene der Fig. 1 aufeinanderfolgend gestapelt und miteinander verbunden sind, z.B. durch Klebung.

Der Rotorteil 6 weist radial weiter außen befindlich einen Basisbereich 18 auf, von dem diskrete Rotorpole 20 in Richtung zum Luftspalt 8 hin vorragen. Die Rotorpolflächen 22 sind - in Umfangsrichtung gemessen - im wesentlichen so lang wie die Statorpolflächen 16.

Sowohl der Statorteil 4, wie er bisher beschrieben wurde, mit seinem Basisbereich 10 und seinen Statorzähnen 12, als auch der Rotorteil 6 mit seinem Basisbereich 18 und seinen Rotorpolen 20, bestehen aus magnetisch leitendem Material.

Auf jedem Statorzahn 12 ist eine Spule 24 angeordnet. Jeder Statorzahn 12 ist in Relation zu seinen beiden Nachbar-Statorzähnen 12 gegensinnig bewickelt.

Die gezeichnete Ausführungsform der Elektromaschine 2 ist mit rotierbarem Außenrotorteil 6, dessen Drehrichtung mit einem Pfeil 26 angegeben ist. Der Statorteil 4 ist undrehbar. Bei der in Fig. 1 gezeichneten Rotations-Relativstellung des Rotorteils 6 relativ zu dem Statorteil 4 sind die Wicklungen 24 aller Statorzähne 12 eingeschaltet. Sobald sich der Rotorteil 26 noch ein Stück weiter entgegen dem Uhrzeigersinn gedreht hat, also alle Rotorpole 20 jeweils einem Statorpol 16 im wesentlichen gegenüberstehen, wird für alle Wicklungen 24 der Strom abgeschaltet. Der Rotorteil 6 dreht sich infolge Trägheit weiter, und die Ströme durch die Spulen 24 werden wieder eingeschaltet, sobald jeder Rotorpol 20 im wesentlichen etwa mittig zwischen zwei benachbarten Statorpolen 16 steht.

Außen um die Statorpolflächen 16 herum ist zylindrisch eine Abdichtlage 28 gelegt und an dem Statorteil 4 befestigt. Die Abdichtlage 28 besteht aus einer radial inneren, ersten Schicht 30 zur Erfüllung einer Abdichtungsfunktion und einer radial äußeren, zweiten Schicht 32 zur Aufnahme der auf die Abdichtungslage 28 wirkenden Kräfte. Durch die Abdichtungslage 28 werden die jeweils zwischen zwei benachbarten Statorzähnen 12 befindlichen Nuträume nach radial außen kühlmediumdicht abgeschlossen.

Außerdem erkennt man in Fig. 1 in Axialrichtung verlaufende Strömungspassagen 34 im Inneren der Statorzähne 12 sowie in Axialrichtung verlaufende Strömungspassagen 36 im Inneren des Basisbereichs 10 des Statorteils 4.

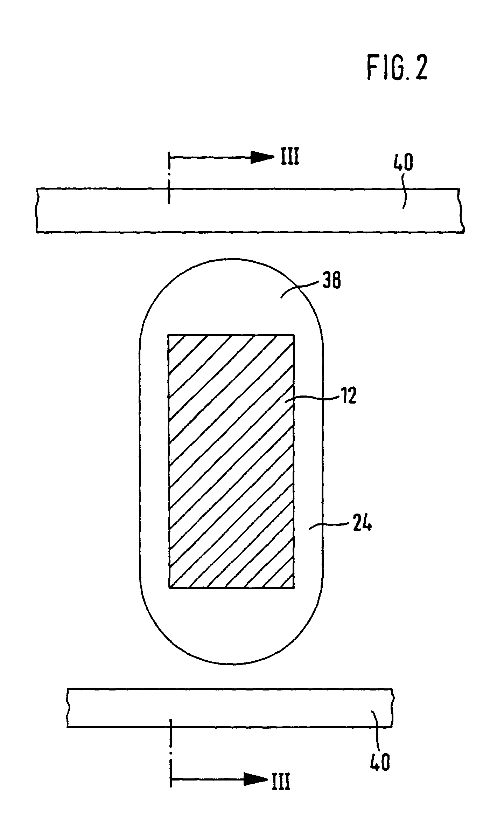

In Fig. 2 erkennt man, daß die Spulen 24 in den stirnseitig von den Statorzähnen 12 befindlichen Wickelkopfbereichen 38 "dicker" sind als in den Nutbereichen 14. In den Wickelkopfbereichen 38 sind die einzelnen Lagen der betreffenden Spule 24 mit kleinem Abstand angeordnet, so daß dort quasi innere Strömungspassagen gebildet sind.

In Fig. 3 erkennt man, wie stirnseitig von den Statorzähnen 12 abgeschlossene Strömungspassagen 39 gebildet sind, die in Umfangsrichtung verlaufen. An dem Statorteil 4 ist ein ringförmiges, im Querschnitt U-förmiges Bauteil 40 befestigt. Das Bauteil 40 besteht z. B. aus Kunststoff. Auf den Schenkeln des Bauteils 40 ruht radial außen die Abdichtungslage 28 auf.

In den Nutbereichen 14 bzw. Strömungspassagen 39 befindet sich z.B. elektrisch nicht leitendes Öl als Kühlmedium. Das Kühlmedium kann z.B. an einer bestimmten Stelle in eine der Strömungspassagen 39 eintreten. Es strömt dann in Umfangsrichtung in dieser Strömungspassage 39 und kühlt die Wickelkopfbereiche 38 an dieser Stirnseite des Statorteils 4. Das Kühlmedium kann durch die Nut-Strömungspassagen 14 in die andere Umfangs-Strömungspassage 39 übertreten, wobei es in den Nut-Strömungspassagen 14 die dortigen Bereiche der Spulen 24 kühlt. Das Kühlmedium strömt dann in der anderen Umfangs-Strömungspassage 39 und wird an einer derartigen Stelle abgeführt, daß der gesamte Statorteil 4 gekühlt worden ist. Wie auch die Zeichnungsfiguren vor Augen führen, kommt die Strömung des Kühlmediums an vielen Stellen mit den Statorzähnen 12 und am Grund der betreffenden Nut 14 auch mit dem Basisbereich 10 des Statorteils 4 in Berührung, so daß Wärme auch von den Eisen-Bestandteilen des Statorteils 4 abgeführt wird.

Wenn gewünscht, können die Strömungspassagen 34 und/oder 36 vorhanden sein und von Kühlmedium durchströmt sein, wodurch sich eine noch intensivere Kühlung der Eisen-Bestandteile des Statorteils 4 ergibt. Bei einer Ausführungsform, bei der kein U-förmiges Bauteil vorgesehen ist, kann der Statorteil 4 an seiner inneren Umfangsfläche mit radial nach innen ragenden Rippen 42 versehen sein, damit dort bessere Wärmeabfuhrbedingungen, z.B. an das flüssige Kühlmedium oder wenn die Konstruktion entsprechend gestaltet ist, auch an gasförmiges Kühlmedium, insbesondere Luft, herrschen.

## Patentansprüche

1. Reluktanz-Elektromaschine, aufweisend
(a) einen Statorteil (4) mit Statorzähnen (12) aus magnetisch leitfähigem Material, die mit Spulenwicklungen (24) ausgestattet sind;
(b) und einen Rotorteil (6), der koaxial mit dem Statorteil (12) angeordnet ist und dem Statorteil (12) unter Freilassung eines Luftspalts (8) gegenüberliegt,
(c) wobei der Rotorteil (6) eine Reihe von in Richtung zu dem Statorteil (12) vorspringenden, diskreten Polen (20) aus magnetisch leitfähigem Material aufweist,
(d) daß mindestens für Teilbereiche der Spulenwicklungen (24) des Statorteils (12) eine Kühlung mit kanalisierter Kühlmittelströmung vorgesehen ist,
(e) daß der Statorteil (4) auf der dem Luftspalt (8) zugewandten Seite mit einer Abdichtungslage (28) versehen ist,
**dadurch gekennzeichnet,**
(f) daß ein flüssiges Kühlmedium vorgesehen ist, und
(g) daß die Abdichtungslage (28) eine erste Schicht (30) zur Erfüllung der Abdichtungsfunktion und eine zweite Schicht (32) zur Aufnahme der auf die Abdichtungslage (28) wirkenden Kräfte aufweist.

2. Reluktanz-Elektromaschine nach Anspruch 1,
**dadurch gekennzeichnet,**
**daß** die Spulenwicklungen (24) jeweils mit einer Umschließung versehen sind.

3. Reluktanz-Elektromaschine nach Anspruch 1,
**dadurch gekennzeichnet,**
**daß** jeweils mehrere Spulenwicklungen (24) gemeinsam mit einer Umschließung versehen sind.

4. Reluktanz-Elektromaschine nach Anspruch 1,
**dadurch gekennzeichnet,**
**daß** der Statorteil (4) insgesamt mit einer Umschließung (28, 40) versehen ist.

5. Reluktanz-Elektromaschine nach einem der Ansprüche 2 bis 4,
**dadurch gekennzeichnet,**
**daß** mehrere Kühlmittel-Zuführungen und mehrere Kühlmittel-Abführungen für die Umschließung vorgesehen sind.

6. Reluktanz-Elektromaschine nach einem der Ansprüche 1 bis 5,
**dadurch gekennzeichnet,**
**daß** die Statorzähne (12) innere Strömungspassagen (34) für das Kühlmedium aufweisen.

7. Reluktanz-Elektromaschine nach einem der Ansprüche 1 bis 6,
**dadurch gekennzeichnet,**
**daß** bezüglich der Rotationsachse der Elektromaschine (2) der Statorteil (4) radial weiter innen und der Rotorteil (6) mit seinen Rotorpolen (20) radial weiter außen angeordnet ist.

8. Reluktanz-Elektromaschine nach einem der Ansprüche 1 bis 6,
**dadurch gekennzeichnet,**
**daß** bezüglich der Rotationsachse der Elektromaschine der Statorteil mit seinen Statorzähnen radial weiter außen und der Rotorteil radial weiter innen angeordnet ist.

9. Reluktanz-Elektromaschine nach einem der Ansprüche 1 bis 8,
**dadurch gekennzeichnet,**
**daß** der Statorteil (4) auf der dem Rotorteil (6) abgewandten Seite eine Ausbildung (42) zur Erhöhung der Wärmeabfuhr besitzt.

10. Reluktanz-Elektromaschine nach einem der Ansprüche 1 bis 9,
**dadurch gekennzeichnet,**
**daß** die Spulenwicklungen (24) in den stirnseitig von den Statorzähnen (12) befindlichen Wickelkopfbereichen (38) mit zwischen Spulenwicklungsleitern freigelassenen Strömungspassagen für das Kühlmedium ausgeführt sind.

11. Reluktanz-Elektromaschine nach einem der Ansprüche 1 bis 10,
**dadurch gekennzeichnet,**
**daß** die Spulenwicklungen (24) des Statorteils (4) als Einzelspulen ausgebildet sind, die hinsichtlich des magnetischen Flusses nicht miteinander verkettet sind.

12. Reluktanz-Elektromaschine nach einem der Ansprüche 1 bis 11,
**dadurch gekennzeichnet,**
**daß** ein erster, innerer Kühlkreislauf zum Zirkulieren des Kühlmediums und ein zweiter äußerer Kühlkreislauf zum Zirkulieren eines weiteren Kühlmediums vorgesehen sind, der über einen Wärmetauscher an den inneren Kühlkreislauf angeschlossen ist.

13. Reluktanz-Elektromaschine nach Anspruch 12,
**dadurch gekennzeichnet,**
**daß** der innere Kühlkreislauf eine eigene Umwälzpumpe aufweist.

14. Reluktanz-Elektromaschine nach Anspruch 12 oder 13,
**dadurch gekennzeichnet,**
**daß** der innere Kühlkreislauf und der Wärmetauscher räumlich an der Reluktanz-Elektromaschine integriert sind.

## Claims

1. A reluctance electric machine comprising
(a) a stator part (4) with stator teeth (12) of magnetically conductive material that are provided with coil windings (24);
(b) and a rotor part (6) arranged coaxially with respect to the stator part (12) and located opposite the stator part (12) so as to leave free an air gap (8) therebetween,
(c) the rotor part (6) having a number of discrete poles (20) of magnetically conductive material that project in the direction towards the stator part (12),
(d) that cooling with channelled coolant flow is provided at least for partial sections of the coil windings (24) of the stator part (12),
(e) that the stator part (4) is provided with a sealing layer (26) on the side facing the air gap (8),
**characterized in**
(f) that a liquid cooling medium is provided, and
(g) that the sealing layer (28) has a first layer (30) for fulfilling the sealing function and a second layer (32) for taking up the forces acting on the sealing layer (28).

2. A reluctance electric machine according to claim 1, **characterized in that** the coil windings (24) are provided with an enclosure each.

3. A reluctance electric machine according to claim 1, **characterized in that** several coil windings (24) are commonly provided with an enclosure each.

4. A reluctance electric machine according to claim 1, **characterized in that** the stator part (4) is provided with an enclosure (28, 40) in its entirety.

5. A reluctance electric machine according to any of claims 2 to 4, **characterized in that** there are provided several coolant supply means and several coolant discharge means for the enclosure.

6. A reluctance electric machine according to any of claims 1 to 5, **characterized in that** the stator teeth (12) have internal flow passages (34) for the cooling medium.

7. A reluctance electric machine according to any of claims 1 to 6, **characterized in that**, with respect to the axis of rotation of the electric machine (2), the stator part (4) is arranged farther radially inside and the rotor part (6) with its rotor poles (20) is arranged farther radially outside.

8. A reluctance electric machine according to any of claims 1 to 6, **characterized in that**, with respect to the axis of rotation of the electric machine, the stator part with its stator teeth is arranged farther radially outside and the rotor part is arranged farther radially inside.

9. A reluctance electric machine according to any of claims 1 to 8, **characterized in that** the stator part (4), on the side directed away from the rotor part (6), has a design (42) for increasing the heat dissipation.

10. A reluctance electric machine according to any of claims 1 to 9, **characterized in that** the coil windings (24), in the winding head portions (38) located on the face side of the stator teeth (12), are formed with flow passages for the cooling medium that are left free between coil winding conductors.

11. A reluctance electric machine according to any of claims 1 to 10, **characterized in that** the coil windings (24) of the stator part (4) are designed as individual coils that are not interlinked with respect to the magnetic flux.

12. A reluctance electric machine according to any of claims 1 to 11, **characterized in that** a first, internal cooling circuit for circulating the cooling medium and a second, external cooling circuit for circulating another cooling medium are provided, the latter being connected to the internal cooling circuit via a heat exchanger.

13. A reluctance electric machine according to claim 12, **characterized in that** the internal cooling circuit has a circulation pump of its own.

14. A reluctance electric machine according to claim 12 or 13, **characterized in that** the internal cooling circuit and the heat exchanger are integrated in terms of space on the reluctance electric machine.

## Revendications

1. Machine électrique à réluctance, comprenant :
(a) une partie stator (4) avec des dents de stator (12) dans un matériau à conductibilité magnétique, qui sont munies d'enroulements de bobines (24) ; et
(b) une partie rotor (6) qui est agencée en position coaxiale avec la partie stator (12) et fait face à la partie stator (12) en laissant libre un entrefer (8);
(c) où la partie rotor (6) présente une série de pôles discrets (20) qui s'étendent dans la direction de la partie stator (12) dans un matériau à conductibilité magnétique ;
(d) un refroidissement par une circulation canalisée d'un moyen de refroidissement est prévue au moins pour des zones parties des enroulements de bobines (24) de la partie stator (12) ;
(e) la partie stator (12) est munie d'une couche d'étanchéité (28) sur le côté dirigé vers l'entrefer (8) ;
**caractérisée en ce que** :
(f) un moyen de refroidissement liquide est prévu ; et
(g) la couche d'étanchéité (28) présente une première épaisseur (30) pour réaliser la fonction d'étanchéité et une deuxième épaisseur (32) pour absorber les forces qui s'exercent sur la couche d'étanchéité (28).

2. Machine électrique à réluctance selon la revendication 1, **caractérisée en ce que** les enroulements de bobines (24) sont chacun munis d'un scellement.

3. Machine électrique à réluctance selon la revendication 1, **caractérisée en ce que** plusieurs enroulements de bobines (24) sont à chaque fois munis d'un scellement commun.

4. Machine électrique à réluctance selon la revendication 1, **caractérisée en ce que** la partie stator (4) dans son ensemble est munie d'un scellement (28, 40).

5. Machine électrique à réluctance selon l'une quelconque des revendications 2 à 4, **caractérisée en ce que** plusieurs conduites d'arrivée de moyen de refroidissement et plusieurs conduites d'évacuation de moyen de refroidissement sont prévues pour le scellement.

6. Machine électrique à réluctance selon l'une quelconque des revendications 1 à 5, **caractérisée en ce que** les dents du stator (12) présentent des passages de circulation intérieurs (34) pour le moyen de refroidissement.

7. Machine électrique à réluctance selon l'une quelconque des revendications 1 à 6, **caractérisée en ce que**, par rapport à l'axe de rotation de la machine électrique (2), la partie stator (4) est agencée en direction radiale plus à l'intérieur et la partie rotor (6) avec ses pôles de rotor (20) en direction radiale plus à l'extérieur.

8. Machine électrique à réluctance selon l'une quelconque des revendications 1 à 6, **caractérisée en ce que**, par rapport à l'axe de rotation de la machine électrique (2), la partie stator avec ses dents de stator est agencée en direction radiale plus à l'extérieur et la partie rotor en direction radiale plus à l'intérieur.

9. Machine électrique à réluctance selon l'une quelconque des revendications 1 à 8, **caractérisée en ce que** la partie stator (4) possède un évidement (42) pour augmenter l'évacuation de chaleur sur le côté opposé à la partie rotor (6).

10. Machine électrique à réluctance selon l'une quelconque des revendications 1 à 9, **caractérisée en ce que** les enroulements de bobines (24) sont réalisés dans les zones des têtes de bobines (38) situées à l'avant des dents du stator (12) avec des passages de circulation laissés libres entre les conducteurs des enroulements de bobines pour le moyen de refroidissement.

11. Machine électrique à réluctance selon l'une quelconque des revendications 1 à 10, **caractérisée en ce que** les enroulements de bobines (24) de la partie stator (4) sont réalisés comme des bobines individuelles qui ne sont pas enchaînées entre elles au niveau du flux magnétique.

12. Machine électrique à réluctance selon l'une quelconque des revendications 1 à 11, **caractérisée en ce qu'**un premier circuit de refroidissement intérieur pour la circulation du moyen de refroidissement et un deuxième circuit de refroidissement extérieur pour la circulation d'un moyen de refroidissement supplémentaire, qui est raccordé au circuit de refroidissement intérieur par le biais d'un échangeur de chaleur, sont prévus.

13. Machine électrique à réluctance selon la revendication 12, **caractérisée en ce que** le circuit de refroidissement intérieur présente sa propre pompe de circulation.

14. Machine électrique à réluctance selon l'une quelconque des revendications 12 ou 13, **caractérisée en ce que** le circuit de refroidissement intérieur et l'échangeur de chaleur sont intégrés physiquement dans la machine électrique à réluctance.
